# DEMANDE DE BREVET EUROPEEN

(11) **EP 0 553 047 A1**
(43) Date de publication de la demande: **28.07.1993**
(21) Numéro de dépôt: 93420040.3
(22) Date de dépôt: 25.01.1993
(51) Int. Cl.: G05B 19/04, G05B 19/10, G05B 19/12

(54) **Procédé de traitement de produits codés, par l'intermédiaire d'au moins un appareil électroménager et appareil en faisant application**

(30) Priorité: 24.01.1992 FR 9200972
(71) Demandeur: SEB S.A., F-69130 Ecully (FR)
(72) Inventeur: Ligny, Jean-Jacques, F-21370 Velars S/Ouche (FR); Bouly, Bernard, F-21000 Dijon (FR)

(57) **Abrégé**

Le procédé selon l'invention concerne un procédé de traitement de produits (3) par l'intermédiaire d'au moins un type d'appareil électroménager, le procédé consistant :
- à définir, pour chaque produit (3), au moins la ou les valeurs d'un ou des paramètres de traitement (p) auxquels le produit (3) doit être soumis,
- à représenter, pour chaque produit (3), la ou les valeurs du ou des paramètres de traitement (p) sous la forme d'un code (6) enregistré sur un support (7) qui est destiné à être affecté au produit (3) correspondant,
- et pour procéder au traitement d'un produit par l'appareil (1), à lire le code (6) affecté au produit, en vue d'obtenir des signaux de commande pour le ou les agents de traitement (2) de l'appareil, de manière que l'appareil traite le produit en relation du ou des paramètres codés (p).

## Description

La présente invention concerne le domaine technique général des appareils relevant principalement de l'éléctroménager et conçus pour assurer la réalisation d'un traitement, au sens général, à l'aide d'un ou de plusieurs agents, en général physiques, agissant sur des produits selon un cycle donné de traitement qui est enregistré sous la forme d'un code.

L'invention vise, plus particulièrement, les appareils éléctroménagers, tels que par exemple les fours de cuisson, les sèche-cheveux, les fers à repasser ou les machines à café, destinés à agir sur les produits spécifiques à chaque type d'appareil, tels que respectivement sur des produits alimentaires, des cheveux, des pièces de linge ou du café. Chaque catégorie d'appareil comporte un ou plusieurs agents de traitement se présentant, par exemple, sous la forme de résistances électriques (moyens de chauffage) ou de moyens de génération, de pression, de vapeur, d'air ou d'eau., La puissance, le niveau, la vitesse de rotation, la durée et/ou le débit de tels agents sont commandés selon un cycle de traitement évoluant généralement dans le temps.

L'utilisation de tels appareils éléctroménagers a fait naître le besoin de pouvoir disposer de moyens techniques de réglage et/ou de programmation pour les divers paramètres de traitement disponibles sur ces appareils, en vue de faciliter leur utilisation tout en offrant l'avantage de pouvoir disposer de moyens techniques de réglage et/ou de programmation pour les divers paramètres de traitement disponibles sur ces appareils, en vue de faciliter leur utilisation tout en offrant l'avantage de pouvoir disposer, après traitement, d'un produit présentant toutes les caractéristiques souhaitées.

Pour tenter de satisfaire ce besoin, le brevet US-A-4 837 414 a proposé la réalisation d'un four comportant, notamment, un dipositif assurant la lecture de codes à barres constituant chacun un numéro d'identification d'une recette d'un plat culinaire. Le four est accompagné d'un livret de cuisine consignant des recettes affectées chacune de leur code d'identification. A chaque code correspond un programme de cuisson approprié qui est préalablement enregistré dans une mémoire intégrée au four. Après la lecture d'un code affecté à une recette choisie, une unité de contrôle du four sélectionne le programme de cuisson correspondant au numéro codé de la recette. Le programme de cuisson est traduit par l'unité de contrôle pour délivrer des signaux de commande destinés à piloter les résistances électriques du four selon le cycle thermique de traitement prévu.

Manifestement, un tel four offre l'avantage à son utilisateur de pouvoir être réglé facilement et correctement en vue de réussir, sans faille, la cuisson de plats culinaires consignés dans un livre de cuisine. L'usage d'un tel four conduit, néanmoins, à observer les inconvénients suivants.

Les programmes de cuisson enregistrés dans le four correspondent chacun à une recette de cuisine inscrite dans un livre de recettes. Il apparaît clair que toute nouvelle recette ou toutes modifications intervenant dans celles existantes ne peut pas être prise en compte par les fours déjà commercialisés. Par ailleurs, il apparaît difficile, voir impossible, d'enregistrer tous les programmes de cuisson pour l'ensembles des plats ou des produits alimentaires susceptibles d'être préparés par l'intermédiaire d'un four de cuisson.

Par ailleurs, il doit être noté que le four décrit par l'art antérieur concerne un four du type à énergie micro-ondes combiné à une chaleur de convection. L'unité de contrôle équipant un tel four ne peut, en aucun cas être installé sur un autre type de four, par exemple à chaleur tournante ou à énergie micro-ondes seule, dans la mesure ou les performances de cuisson sont différentes d'un type de four à l'autre. L'installation d'une telle unité de commande sur les divers types de four conduit à obtenir, pour un même programme de cuisson, un produit différemment traité.

Dans le même sens, l'expérience montre que les modèles de fours relevant d'un type identique, mais provenant par exemple, de divers fabricants, présentent des performances techniques différentes d'un modèle à l'autre. Il s'ensuit que les traitements effectués sur les produits, à partir d'un programme de cuisson donné, varient d'un modèle à l'autre.

L'objet de l'invention vise donc à remédier au inconvénients énoncés ci-dessus en proposant un procédé adapté pour permettre le traitement de produits par l'intermédiaire d'au moins un appareil électroménager qui continue d'assurer sa fonction de traitement, même si après sa configuration ou sa commercialisation, de nouveaux produits à traiter apparaissent ou des modifications interviennent sur le cycle de traitement des produits existants.

Pour atteindre cet objectif, le procédé selon l'invention consiste :
- à définir pour chaque produit la ou les valeurs d'un ou des paramètres de traitement auxquels le produit doit être soumis,
- à représenter, pour chaque produit, la ou les valeurs du ou des paramètres de traitement, sous la forme d'un code enregistré sur un support qui est destiné à être affecté au produit correspondant,
- et pour procéder au traitement d'un produit par l'appareil, à lire le code affecté au produit, en vue d'obtenir des signaux de commande pour le ou les agents de traitement de l'appareil, de manière que l'appareil traite le produit en relation du ou des paramètres codés.

Selon une caractéristique particulièrement avantageuse, le procédé selon l'invention consiste à représenter la ou les valeurs du ou des paramètres de traitement, sous la forme d'un code à barres.

L'objet de l'invention vise, également, à proposer un procédé apte à permettre de traiter un produit selon des caractéristiques précises correspondant à un code, quel que soit l'appareil utilisé dans une famille donnée d'appareils électroménagers mettant en oeuvre le procédé selon l'invention.

A cet effet, le procédé de traitement selon l'invention consiste :
- à attribuer à chaque appareil électroménager faisant parti d'une famille, un coefficient de pondération pour chacun des paramètres de traitement, chaque coefficient étant déterminé pour pondérer les valeurs codées du paramètre correspondant, en fonction des caractéristiques techniques des agents de traitement spécifiques de l'appareil,
- à sélectionner, en relation de l'appareil utilisé, le coefficient de pondération correspondant à chaque paramètre codé,
- et à modifier les signaux de commande de chaque agent de traitement, par l'intermédiaire du coefficient de pondération correspondant sélectionné.

Diverses autres caractéristiques ressortent de la description faite ci-dessous en référence aux dessins annexés qui montrent, à titre d'exemple non limitatifs, des formes de réalisation de l'objet de l'invention.
La Figure 1 est un schéma bloc fonctionnel d'un appareil de traitement conçu pour mettre en oeuvre le procédé conforme à l'invention.
La Figure 2 montre un tableau explicitant le principe des coefficients de pondération selon l'invention.
La Figure 3 illustre un exemple de configuration d'une unité de commande associée à un appareil de traitement selon l'invention.
La Figure 4 est une autre vue d'un exemple de réalisation d'une unité de traitement équipant un appareil électroménager selon l'invention.
La Figure 5 décrit un organigramme permettant la mise en oeuvre du procédé selon l'invention.

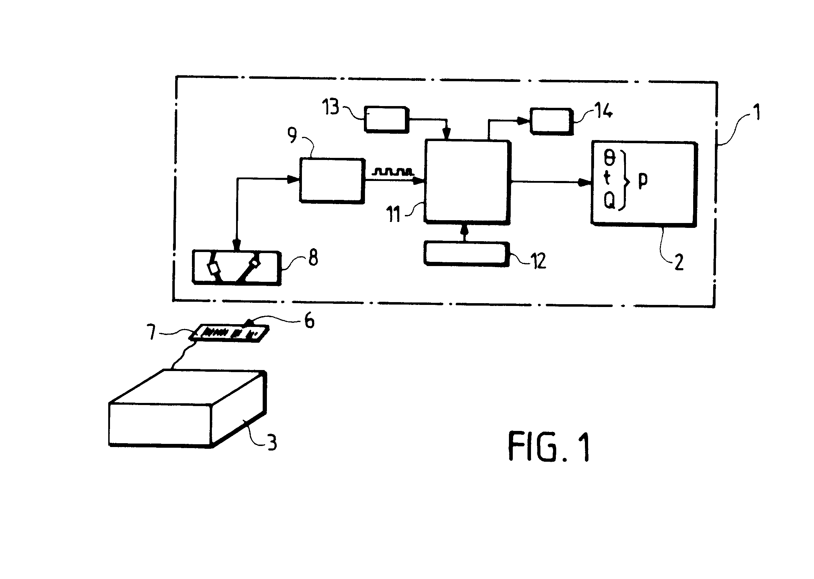

La Figure 1 illustre un appareil électroménager 1 conçu pour assurer, par l'intermédiaire d'agents 2, un traitement au sens général sur un produit 3. A titre d'exemple, l'appareil de traitement 1 peut appartenir à la catégorie des fours de cuisson, des fers à repasser, des appareils sèche-cheveux ou des cafetières. Pour chaque application ou catégorie énoncée ci-dessus à titre d'exemple, le produit 3 constitue respectivement un plat culinaire, un linge ou un vêtement, des cheveux ou du café. Chaque appareil 1 est apte à assurer le traitement d'un produit correspondant par l'intermédiaire d'agents de traitement 2, formés classiquement par des résistances chauffantes ou des moyens de génération de vapeur de vapeur ou d'air. De tels agents 2 sont commandés à des valeurs données, selon un cycle temporel défini. Les agents 2 agissent sur des paramètres de traitement p auxquels le produit doit être soumis. Atitre d'exemple, ces paramètres p relévent d'une température 0, d'un temps t ou d'un débit Q d'eau ou d'air.

Le procédé selon l'invention vise à définir, pour chaque produit 3, la ou les valeurs d'un ou des paramètres p, auxquels le produit doit être soumis. Les caractéristiques ou les paramètres de traitement sont déterminés intialement pour chaque produit. Les valeurs des paramètres sont liées à la nature ou aux caractéristiques intrinsèques du produit et prennent en compte les qualités souhaitées et devant être présentées par le produit après son traitement.

A titre d'exemple, dans le cas d'une application relevant de la catégorie des fours de cuisson, la détermination des paramètres peut revenir à définir, pour chaque produit, le cycle thermique de cuisson qui donne l'évolution de la température de cuisson en fonction du temps. Pour une application relevant du soin du linge, les paramètres de traitement p choisis peuvent correspondre à la tempérautre et/ou au débit de vapeur nécessaires pour traiter chaque produit en tenant compte du matériau le constituant.

La ou les valeurs du ou des paramètres de traitement ainsi définis pour chaque produit sont représentées sous la forme d'un code 6 constituant, de préférence, un code à barres. Le code 6 est enregistré sur un support 7 qui est destiné à être affecté au produit 3 correspondant. Un tel support 7 peut être rapporté directement sur le produit ou l'emballage du produit ou être directement enregistré sur le produit par un marquage approprié,, ou bien encore, comme illustré à la Figure 1, accompagner le produit.

D'une manière générale, le code 6 est associé physiquement à un produit 3 et permet de coder les informations nécessaires au traitement du produit. Bien entendu, le code 6 peut être utilisé pour assurer supplémentairement le codage d'informations diverses en relation du produit. Il est bien évident, également, que le code 6 peut être associé, non pas à un produit existant, mais à une représentation d'un produit. dans un tel cas, le code 6 contient les informations permettant, d'une manière complète ou partielle, la préparation, la fabrication ou l'obtention du produit. Par exemple, pour une application relevant des fours de cuisson, le code 6 peut indiquer non seulement le cycle de traitement du produit, mais également donner des informations sur la recette de cuisine pour obtenir le produit, telles que par exemple les quantités des divers composants rentrant dans la constitution du produit, le mode opératoire ou le processus de préparation. Un tel code 6 est alors, de préférence, consigné dans un livret de recettes de cuisine.

Pour procéder au traitement d'un produit 3 par l'appareil 1, le code 6 affecté au produit est lu par un bloc 8 de nature optique, dans le cas d'un code à barres 6, intégré ou non à l'appareil de traitement 1. Le bloc optique 8 est relié à un circuit 9 de décodage et de mise en forme du signal lumineux reçu. Le circuit 9 est relié en sortie à un circuit de traitement, de conversion et de commande 11 délivrant en sortie des signaux de commande pour piloter les agents de traitement 2. D'une manière classique, le circuit de commande 11, qui est relié à une alimentation 12, est apte à recevoir des ordres de commande de touches manuelles 13 et à délivrer des signaux de visualisation par des moyens correspondants 14.

Le procédé selon l'invention offre donc l'avantage d'assurer la réalisation d'un cycle de traitement correspondant à un code spécifique à chaque produit considéré. Un appaereil électroménager mettant en oeuvre le procédé selon l'invention est donc apte à exercer sa fonction, même si des produits nouveaux apparaissent ultérieurement à sa configuration initale ou sa commercialisation.

Selon une caractéristique avantageuse de l'invention, il est prévu un procédé visant à autoriser le traitement d'un produit 3 par l'intermédiaire d'un appareil 1, appartenant à une famille d'appareils électroménagers. Les appareils 1 de cette famille sont configurés pour mettre en oeuvre le procédé selon l'invention et permettent d'obtenir un produit 3 traité selon les caractéristiques correspondant à la lecture du code 6. Cette famille peut comporter des appareils relevant d'une ou de plusieurs catégories d'appareils électroménagers. A tire d'exemple, une catégorie d'appareils électroménagers peut correspondre, par exemple, à des fours de cuisson, des fers à repasser, des appareils sèche-cheveux ou des cafetières. Pour une même catégorie d'appareils électroménagers, il peut être prévu de disposer de plusieurs types a d'appareils. Ainsi, pour la catégorie concernant les fours de cuisson, divers types sont connus, tels que, par exemple, les fours à énergie micro-ondes, les fours à chaleur tournante ou les fours combinant une énergie mirco-ondes et une chaleur tournante. Par ailleurs, chaque type d'appareil peut comporter plusieurs modèles provenant d'un même fabricant ou non.

En résumé, il doit être considéré qu'une famille d'appareils électroménagers au sens de l'invention regroupe l'ensemble des appareils électroménagers mettant en oeuvre le procédé selon l'invention. Les appareils de cette famille font partie d'au moins une catégorie pour laquelle un ou plusieurs types d'appareils sont disponibles, un type d'appareil étant susceptible d'être fabriqué sous la forme d'un et, en général, de divers modèles provenant d'un ou de différents constructeurs.

Selon l'invention, chaque appareil électroménager 1 appartenant à une telle famille est affecté d'un coefficient de pondération Kp pour chacun des paramètres de traitement p, susceptibles d'être mis en oeuvre par l'appareil. Pour une même catégorie d'appareils, ces coefficients permettent, à partir d'un cycle de traitement donné, d'obtenir un traitement identique quel que soit le type et/ou le modèle d'appareil utilisé dans cette catégorie, même si les performances techniques varient d'un type ou d'un modèle à l'autre.

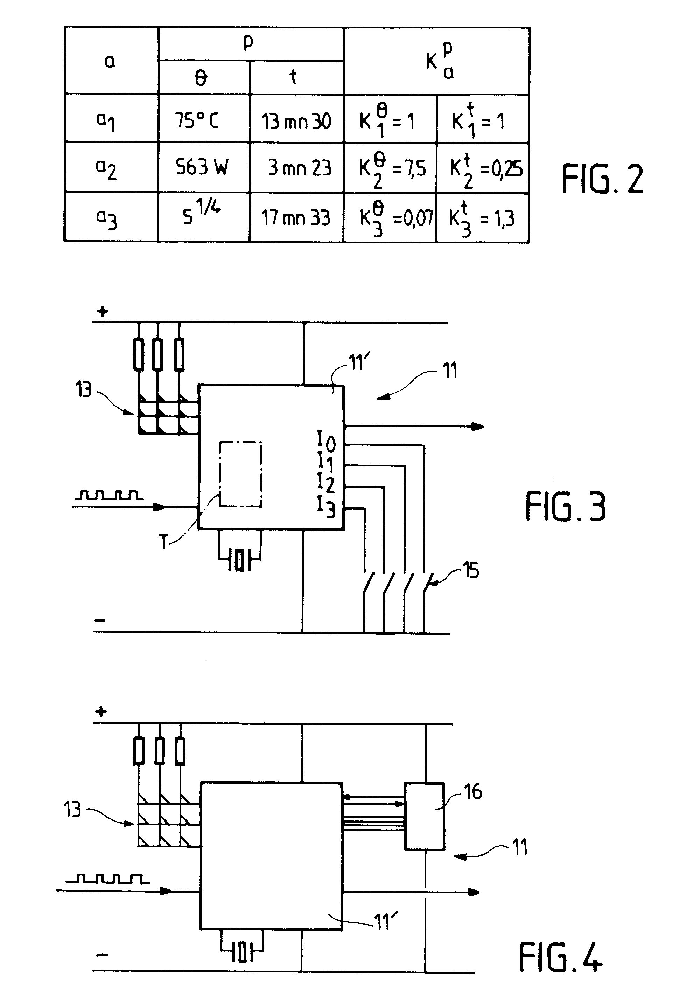

La Figure 2 illustre, à titre d'exemple, la mise en oeuvre de coefficients de pondération Kpa pour une application visant la catégorie des fours de cuisson comportant trois types a de fours. Le type a1 de four correspond à un four combinant une énergie micro-ondes et une chaleur tournante. Il est considéré qu'un tel four a1 doit traiter un produit 3 à une température 0 de 75° C pendant une durée t de 13 mn 20. Ace type de four a1, qui constitue l'élément de référence, il est affecté un coefficient K01 égal à 1 et un coefficient Kt1 aussi égal à 1.

Si, par exemple, le type a2 d'appareil constitue un four à micro-ondes, il est à noter que le produit doit être soumis à une puissance de 563 W pendant une durée de 3 mm 23, en vue d'aboutir à un traitement similaire à celui obtenu avec le type a1. Pouratteindre un tel objectif, le coefficient de pondération K2 est égal à 7,5, tandis que le coefficient Kt2 est égal à 0,25.

Si le type a3 d'appareil est un four à chaleur tournante, le produit 3 doit être soumis à une puissance correspondant à un thermostat placé sur la position 5 1/4 pendant une durée de 17 mm 33, afin d'obtenir un produit présentant caractéristiques de traitement similaires à celles obtenues avec les types a1 et a2. Le coefficient de pondération de température K03 est égal à 0,07 tandis que le coefficient de pondération temporel Kt3 est égal à 1,3.

Bien entendu, il peut être prévu de définir des coefficients de pondération Kp pour d'autres types de four ou pour des fours appartenant à un même type mais relevant de modèles différents commercialisés sous une marque identique ou non. Dans ce dernier cas, la mise en oeuvre des coefficients de pondération permet de compenser les écarts apparaissant entre les modèles, notamment au niveau de la puissance réelle restituée et agissant directement sur le produit.

le procédé selon l'invention vise à sélectionner, en fonction de l'appareil de traitement utilisé, le coefficient de pondération Kp correspondant à chaque paramètre codé p mis en oeuvre par l'appareil. La ou les valeurs du ou des paramètres codées p sont modifiées par le coefficient de pondération correspondant, de manière à obtenir des signaux de commande des agents de traitement qui tiennent compte des caractéristiques ou des performances techniques spécifiques de l'appareil utilisé.

Dans l'exemple de réalisation illustré à la Figure 3, les coefficients de pondération Kp sont enregistrés dans une table de conversion T mémorisée avantageusement dans un microprocesseur 11' faisant partie du circuit de commande 11. La sélection des coefficients de pondération Kp des agents 2 équipant l'appareil dans lequel le microprocesseur est monté, s'effectue par l'intermédaire de moyens d'affectation 15 de l'état d'une série, par exemple égale à quatre, d'entrées ou de broches 10 à 13 du microprocesseur. Les entrées 10-13 sont placées dans un état donné pour former ensemble une combinaison d'adressage des coefficients correspondant à l'appareil. A titre d'exemple, les entrées 10 à 13 du microprocesseur peuvent être placées à l'état logique 0, de manière que la combinaison ainsi formée corresponde à la sélection des coefficients de pondération Kp1 pour l'appareil dans lequel le microprocesseur est monté. Si un tel microprocesseur doit équiper un appareil du type a2, il peut être prévu de placer, par exemple, l'entrée 10 à une valeur logique 1 et les entrées 11 à 13 à des valeurs logiques 0, de manière que la combinaison ainsi formée permette la sélection des coefficients de pondération Kp2.

Ainsi, il peut être prévu de réaliser un circuit universel de commande 11 capable d'équiper différents appareils appartenant à la famille d'appareils au sens de l'invention. Lors du montage d'un tel circuit de commande 11 dans un appareil, les entrées 1 du microprocesseur 11' sont placées dans une position donnée correspondant à la sélection des coefficients de pondération de l'appareil. Bien entendu, si de nouveaux coefficients de pondération doivent être enregistrés dans la table pour tenir compte de l'apparition de nouveaux appareils élctroménagers, il pourra être prévu de rajouter de telles données dans la table de conversion, afin de continuer à rendre universelle d'utilisation d'un tel circuit de commande.

La Figure 4 illustre une autre variante de réalisation pour sélectionner les coefficients de pondération affectés à l'appareil utilisé. Selon ce procédé, il est prévu de mettre en oeuvre un circuit de commande 11 comportant un microprocesseur 11' relié à une mémoire 16 contenant les coefficients de pondération correspondant à l'appareil dans lequel elle est montée. Selon ce procédé, il est prévu d'utiliser un même microprocesseur 11' pour tous les appareils de la famille et un type de mémoire programmée 16 pourcha- que type ou modèle d'appareil.

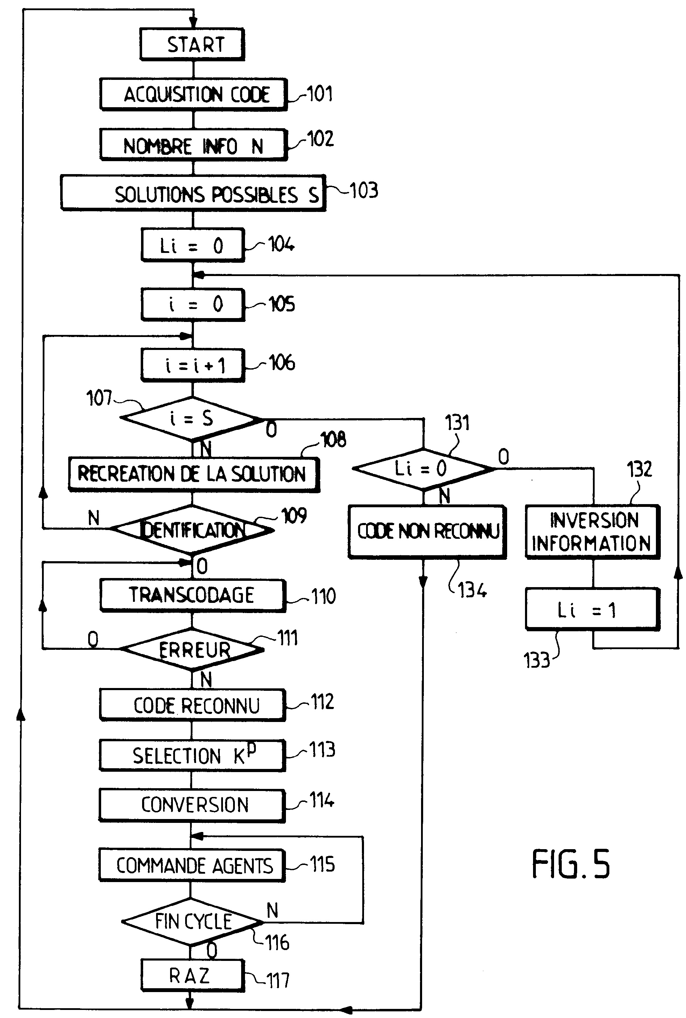

La Figure 5 illustre, de manière détaillée sous la forme d'un organigramme, le déroulement d'une opération destinée à assurer le traitement d'un produit 3 par un appareil électroménager 1. Bien entendu, avant la lecture d'un code affecté au produit, l'appareil 1 utilisé est configuré pour intégrer au moins les propres coefficients de pondération Kp, enregistrés soit. dans une mémoire programmée 16 reliée au microprocesseur, soit à l'intérieur d'une table T mémorisée dans le mircoprocesseur dont certaines de ses entrées 1 ont été placées par câblage pourformer une combinaison correspondant aux coefficients de pondération spécifiques de l'appareil.

Le traitement d'un produit 3 par l'appareil 1 commence par une phase 101 d'acquisition des données au cours de laquelle le bloc optique 8 assure la lecture du code 6 dont le format est de n informations correspondant à des traits et à des intervalles séparant deux traits consécutifs. Après l'acquisition des données, il est prévu, lors d'une phase 102, de procéder ai comptage du nombre N des informations lues. D'une manière générale, il est à considérer que le nombre N d'informations lues est supérieur au nombre n d'informations codées dans la mesure où sont également enregistrées, lors de la phase de lecture, des informations parasites. Lors d'une phase 103, il est prévu de déterminer le nombre S de solutions possibles pour retrouver, parmi les N informations lues, le code de format n. D'une manière générale, le nombre de solutions S est égal à N - n + 1. A titre d'exemple, si le code à barres enregistré réellement sur le support contient 13 informations, alors que l'acquisition aboutit à l'obtention de 16 informations, il doit être considéré qu'il existe 4 solutions possibles pour retrouver le bon code. Ainsi, le code à retrouver correspond aux informations apparaissant aux rangs, soit 1 à 13, 2 à 14, 3 à 15 ou 4 à 16.

Après une phase 104 de mise à l'état 0 d'un compteut Li de lecture inverse et une phase 105 de mise à 0 d'un compteur i, il est procédé à une étape 106 au cours de laquelle le compteur i qui est incré- menté de 1 à chaque passage, comptabilise le rang de la solution de code envisagée. Si après une opération de test 107, le compteur i n'est pas égal au nombre maximum de solutions S, la solution considérée est recréée lors d'une phase 108. la solution de code ainsi recréée est comparée au cours d'une étape 109 pour déterminer si elle comporte les éléments d'identification, notamment de début et de fin de code, normalement, attribués aux codes à barres. Dans la négative, un retour à l'étape 106 est effectué, de manière à décaler la sélection parmi les N informations lues des n informations d'un pas égal à une information. Un tel processus de décalage est renouvelé tant que le compteur i n'atteint pas S. Lorsque le compteur i est égal au nombre S, il est prévu de procéder, lors d'une étape 132, à une inversion de l'ordre des informations lues N. Un retour à la phase 105 est ensuite effectué parès la mise à l'état 1 du compteur Li lors d'une étape 133.

Si la scrutation des différentes solutions possibles dans l'ordre inverse des données n'a pas permis de retrouver le bon code au terme des S solutions possibles (étape 107), une tape 134 signale que le code n'a pas été reconnu.

Lorsque la solution de code proposé comporte les éléments d'identification (étape 109), un transcodage du code est effectué en binaire, lors d'une étape 110. Un test est ensuite effectué lors d'une phase 111 pour déterminer si le transcodage effectué est correct. Si une erreur de transcodage est décelée, une nouvelle opération de transcodage (phase 110) est effectuée. Si le transcodage est correct, la phase 112 permet de reconnaître un code dont les informations sont aptes à être reçues par l'appareil de traitement utilisé.

Une étape 113 permet de sélectionner le ou les coefficients de pondération Kp associés aux paramètres codés et correspondant à l'appareil de traitement utilisé. Une telle phase consiste donc, soit à lire les données d'une mémoire raccordée au microprocesseur, soit à scruter les entrées 1 du microprocesseur pour choisir les coefficients de pondération affectés à l'appareil utilisé. Au cours d'une phase 114, les valeurs des paramètres apparaissant dans le code sont pondérées chacune par le coefficient sélectionné correspondant. Les nouvelles valeurs calculées donnent lieu à l'émission par le microprocesseur, de signaux de commande destinés à piloter, lors d'une phase 115, les différents agents de traitement. La commande des agents de traitement est réalisée tant que le cycle de traitement codé n'est pas terminé ou interrompu manuellement (phase 116). Lorsque le cycle de traitement prévu est réalisé, les divers éléments constitutifs de l'appareil sont remis, lors d'une phase 117, dans une position initiale pour autoriser l'acquisition ultérieure d'un nouveau code, en vue du traitement du produit correspondant.

L'invention n'est pas limitée aux exemples décrits et représentés, car diverses modifications peuvent y être apportées sans sortir de son cadre.

## Revendications

1. Procédé destiné à permettre le traitement de produits (3) par l'intermédiaire d'au moins un type d'appareil électroménager (1) comportant un ou plusieurs agents de traitement (2) qui sont pilotés par des signaux de commande résultant du décodage d'un code 6 et provenant d'une unité de conversion et de commande (11), caractérisé en ce qu'il consiste :
- à définir, pour chaque produit (3), au moins la ou les valeurs d'un ou des paramètres de traitement (p) auxquels le produit (3) doit être soumis,
- à représenter, pour chaque produit (3), la ou les valeurs du ou des paramètres de traitement (p) sous la forme d'un code (6) enregistré sur un support (7) qui est destiné à être affecté au produit (3) correspondant,
- et pour procéder au traitement d'un produit (3) par l'appareil (1), à lire le code (6) affecté au produit, en vue d'obtenir des signaux de commande pour le ou les agents de traitement (2) de l'appareil, de manière que l'appareil traite le produit en relation du ou des paramètre codés (p).

2. Procédé selon la revendication 1, caractérisé en ce qu'il consiste à représenter la ou les valeurs du ou des paramètres de traitement (p) sous la forme d'un code à barres (6) dont le format correspond à n informations.

3. Procédé selon la revendication 1 ou 2, caractérisé en ce qu'il consiste :
- à attribuer à chaque appareil électroménager (1), faisant partie d'une famille, un coef- ficientde pondération (Kp) pourchacun des paramètres de traitement (p), chaque coefficient étant déterminé pour pondérer les valeurs codées du paramètre correspondant (p), en fonction des caractéristiques techniques des agents de traitement spécifiques à l'appareil,
- à sélectionner, en relation de l'appareil (1) utilisé, le coefficient de pondération (Kp) correspondant à chaque paramètre codé (^{p})^{,}
- et à modifier les signaux de commande de chaque agent de traitement (2), par l'intermédiaire du coefficient de pondération (Kp) correspondant sélectionné.

4. Procédé selon la revendication 3, caractérisé en ce qu'il consiste à sélectionner le ou les coefficients de pondération (Kp) correspondant à l'appareil utilisé, en procédant à une scrutation des entrées (I) de l'unité de commande (11), placées chacune par des moyens d'affectation (15), dans un état donné et formant ensemble une combinaison d'adressage des coefficients (Kp) de l'appareil, préalablement enregistrés dans l'unité de commande (11).

5. Procédé selon la revendication 3, caractérisé en ce qu'il consiste à sélectionner le ou les coefficients de pondération (Kp) correspondant à l'appareil (1) utilisé, en procédant à la lecture d'une mémoire (16) reliée à l'unité de commande (11) et contenant le ou les coefficients de pondération (Kp) spécifiques à l'appareil.

6. Procédé selon les revendications 1 et 2, caractérisé en ce qu'il consiste :
a) à composer le nombre N d'informations lues lors de l'opération de lecture du code (6) de format affecté au produit,
b) à déterminer le nombre S de solutions possibles pour retrouver le code (6) de format n, parmi les N informations lues, le nombre de solutions étant S = N - n + 1,
c) à prendre en compte parmi les N informations lues, les n premières informations, afin de déterminer si la solution de code ainsi formée comporte les éléments d'identification de début et de fin de code.
d) à assurer le transcodage de la solution de code lorsque celle-ci comporte les éléments d'identification,
e) et, tant que la solution de code ne comporte pas les éléments d'identification et jusqu'au nombre S de possibilités, à continuer à prendre en compte successivement n informations parmi les N informations, en décalant à chaque fois la sélection d'un pas égal à une information.

7. Procédé selon la revendication 6, caractérisé en ce qu'il consiste, lorsque la solution de code ne comporte pas les éléments d'identification au terme de la prise en compte des S solutions possibles :
- à inverser l'ordre des N informations lues,
- et à renouveler les opérations c), d) et e).

8. Produit (3) destiné à être traité selon le procédé conforme à l'une des revendications 1 à 7, caractérisé en ce qu'il est associé à un support (7) sur lequel sont enregistrées, sous la forme d'un code à barres (6), au moins la ou les valeurs du ou des paramètres de traitement (p) du produit.

9. Circuit universel de commande (11) adapté pour mettre en oeuvre le procédé conforme à l'une des revendications 1 à 7, caractérisé en ce qu'il comporte :
- des moyens (T, 16) de mémorisation du ou des coefficients de pondération (Kp) attribués à au moins un appareil,
- des moyens de sélection du coefficient de pondération (Kp) correspondant à chaque paramètre codé (p) et attribué à l'appareil (1) équipé d'un tel circuit (11),
- et des moyens de conversion permettant de pondérer chaque paramètre codé par le coefficient (Kp) correspondant.

10. Circuit universel selon la revendication 9, caractérisé en ce que les moyens de mémorisation sont constitués par une mémoire programmée (16) connectés à un microprocesseur (11').

11. Circuit universel selon la revendication 9, caractérisé en ce que les moyens de mémorisation assurent l'enregistrement du ou des coefficients de pondération (Kp) attribués à plusieurs appareils et sont constitués par une table (T) enregistrée dans un microprocesseur (11').

12. Circuit universel selon la revendication 11, caractérisé en ce que le circuit de commande et de conversion (11) comporte un microprocesseur (11') dont les entrées (I) sont associées à des moyens d'affectation (15) permettant de placer les entrées selon des états donnés, formant ensemble une combinaison d'adressage du ou des coefficients correspondant à l'appareil.

13. Appareil électroménager du type comportant, d'une part, des circuits (8,9) de décodage d'un code enregistré en relation d'un produit (3) à traiter et, d'autre part, un ou plusieurs agents de traitement (2) pilotés par des signaux de commande correspondant aux valeurs de paramètres de traitement (p), caractérisé en ce qu'il est équipé d'un circuit universel de commande (11) conforme à l'une des revendications 9 à 12, connecté aux circuits de décodage (8, 9) et relié à chaque agent de traitement (2) pour les piloter par des signaux de commande.
